# EUROPEAN PATENT SPECIFICATION

(11) **EP 4 420 544 B1**
(45) Date of publication and mention of the grant of the patent: **24.09.2025**
(21) Application number: 23862053.8
(22) Date of filing: 18.07.2023
(51) Int. Cl.: A24F 40/10, A24F 40/49, A24F 40/50, A24F 40/53, A24F 40/60, A24F 47/00, G06F 3/01, G06F 21/31

(54) **CONTROL METHOD FOR ELECTRONIC CIGARETTE HAVING CHILD-LOCK FUNCTION**
STEUERUNGSVERFAHREN FÜR ELEKTRONISCHE ZIGARETTE MIT KINDERSICHERUNGSFUNKTION
PROCÉDÉ DE COMMANDE POUR CIGARETTE ÉLECTRONIQUE AYANT UNE FONCTION DE VERROU ENFANT

(30) Priority: 05.09.2022 CN 202211079625
(43) Date of publication of application: 28.08.2024
(73) Proprietor: Huizhou Happy Vaping Technology Limited, Huizhou, Guangdong 516000 (CN)
(72) Inventor: LIN, Guangrong, Huizhou, Guangdong 516000 (CN); ZHENG, Xianbin, Huizhou, Guangdong 516000 (CN)
(74) Representative: Zaboliene, Reda
(86) International application number: PCT/CN2023/107966
(87) International publication number: WO 2024/051352

(56) References cited:
- EP-A1- 3 711 498
- CN-A- 104 921 305
- CN-A- 108 741 240
- CN-A- 108 741 240
- CN-A- 111 227 319
- CN-A- 111 227 319
- CN-A- 113 811 210
- CN-A- 114 916 719
- CN-A- 115 336 814
- US-A1- 2018 177 232

## Description

### TECHNICAL FIELD

The disclosure relates to the technical field of the electronic cigarette child lock, more particularly to a control method of an electronic cigarette with a child lock function.

### BACKGROUND

The electronic cigarette usually heats and vaporizes liquid substances or paste-like substances, such as drugs and electronic cigarette liquid, to produce aerosol or vapor for users to vape. As people pay more attention to their health, they realize that tobacco may be harmful to health. Thus, the electronic cigarettes are widely used. As the electronic cigarettes are widely used, however, sometimes the juveniles may have access to the electronic cigarettes at home and may vape like adults without restriction, which may be harmful to the health of the juveniles.

Some of the existing electronic cigarettes have a physical structure which uses for example special-use switches or buttons to limit use for the juveniles. However, they don't have control programs to automatically limit use for the juveniles upon power up or during operation by an automatically determination and control method. In such a circumstance, it is desired to provide a method of unlocking and locking the electronic cigarette upon power up, to prevent the juveniles from using the electronic cigarette.

Prior art patent publication EP 3 711 498 A1 describes the controlling of a child lock function for an electronic cigarette that involves the user inputting a sequence of long and short button presses to exit the locked mode.

### SUMMARY

### Technical problems

The invention aims to provide a control method of an electronic cigarette with a child lock function to overcome the above-mentioned problems.

### Technical solutions

A technical solution of the invention is as follows. The microcontroller provided in the electronic cigarette is set with a child lock control program which comprises unlocking steps as follows:
S1. When the electronic cigarette device is locked and stop functioning, the microcontroller keeps monitoring a signal indicating the touch button is touched in real time;
S2. once it detects that the touch button is touched, the microcontroller is determining whether the duration of time during which the touch button is touched exceeds a first set time, if yes, go to the next step;
S3. by means of the microcontroller, controlling the LED indicator to light up, wherein the LED indicator is lighted for a second set time, and meanwhile, continuously monitoring whether the touch button is consecutively touched;
S4. once it is detected that the touch button is consecutively touched, determining whether the number of times the touch button is consecutively touched in the second set time reaches a set number by means of the microcontroller, if yes, go to the next step;
S5. by means of the microcontroller, unlocking the electronic cigarette, and lighting up the LED indicator for indication or motor vibration for indication, to allow the electronic cigarette which is unlocked to enter a stand-by state.

Preferably, the step S2 may further comprise: if no, go back to the step S1; the step S4 may further comprise: if no, go back to the step S1.

Preferably, the child lock control program may further comprise locking steps as follows:
S6. once the electronic cigarette enters the stand-by state, monitoring whether the airflow sensor is triggered in real time in a third set time by means of the microcontroller, if no, go to the next step;
S7. microcontroller to lock the electronic cigarette, such that the electronic cigarette enters the locked state and stop functioning, that is, going back to the step S1.

Preferably, the step S2 may further comprise: if no, go back to the step S1; the step S4 may further comprise: if no, go back to the step S1. The step S6 may further comprise: if yes, go to a step S8. It may further comprise the step S8 of controlling the electronic cigarette to enter a working state and monitoring the airflow sensor by means of the microcontroller, and once it is detected that the triggering of the airflow sensor stops, controlling the electronic cigarette to enter the stand-by state and go back to the step S6.

Preferably, the child lock control program may further comprise locking steps as follows:
S6. once the electronic cigarette enters the stand-by state, monitoring the signal indicating the touch button is touched in real time by means of the microcontroller;
S7. once it is detected that the touch button is touched, determining whether the duration of time during which the touch button is touched exceeds the first set time by means of the microcontroller, if yes, go to the next step;
S8. by means of the microcontroller, controlling the LED indicator to light up for the second set time and meanwhile continuously monitoring whether the touch button is consecutively touched;
S9. once it is detected that the touch button is consecutively touched, determining whether the number of times the touch button is consecutively touched in the second set time reaches the set number by means of the microcontroller, if yes, go to the next step;
S10. by means of the microcontroller, locking the electronic cigarette and lighting up the LED indicator for indication or motor vibration for indication, such that the electronic cigarette which is locked enters the locked state, that is, go back to the step S1.

Preferably, the step S2 may further comprise: if no, go back to the step S1; the step S4 may further comprise: if no, go back to the step S1; the step S7 may further comprise: if no, go back to the step S6; and the step S9 may further comprise: if no, go back to the step S6.

Preferably, the first set time may be set to 3-6 seconds.

Preferably, the second set time may be set to 2-5 seconds.

Preferably, the number of times may be set to 3-5.

Preferably, the third set time may be set to 2-30 minutes.

### Advantages

The control method of the electronic cigarette with a child lock function by monitoring touch duration and number of touches to set complicated steps to unlock the device, in such a case, it is difficult for children to find out the visibly hidden touch button, and it is further difficult for children to get access to such complicated unlocking steps without being taught by an adult. Furthermore, it sets certain steps for automatically locking the electronic cigarette within a certain period of time after usage of the electronic cigarette, or sets some steps for manually triggering the touch button to achieve locking in the stand-by state. Hence, it can effectively prevent children from using the electronic cigarette to vape by themselves, and avoid the damage caused thereby.

### BRIEF DESCRIPTION OF THE DRAWINGS

FIG.1 is a flow chart illustrating a control method according to a first embodiment of the invention;
FIG.2 is a flow chart illustrating a control method according to a second embodiment of the invention;
FIG.3 is a flow chart illustrating a control method according to a third embodiment of the invention.

### DETAILED DESCRIPTION OF ILLUSTRATED EMBODIMENTS

To make the purposes, technical solutions and advantages of the invention clear, the invention is described in detail below with reference to the accompanying drawings and embodiments. It should be understood that, the described embodiments are illustrative and are not intended to limit the present invention.

According to the disclosure, an electronic cigarette with a child lock function comprises an electronic cigarette vaporizer and a battery part which are connected with each other. The electronic cigarette vaporizer may be arranged with a heating element which can be energized to work. The heating element may be configured to heat and vaporize the electronic cigarette liquid stored in the electronic cigarette vaporizer, and the electronic cigarette liquid may be heated and vaporized into the vapor or aerosol, i.e., the electronic cigarette smoke. The battery part may be arranged with a circuit control board PCB, and a concealed touch button which is integrated into the surface of the housing of the electronic cigarette and visibly hidden from children. To some extent, such structure limits use for the juveniles. The circuit control board PCB may be provided with a microcontroller for controlling the operation of the electronic cigarette vaporizer. The battery part may be further provided with an airflow sensor for detecting the air flow produced when a user vapes. Once the air flow is detected, the electronic cigarette vaporizer is triggered and activated to energize the heating element to work, and then the electronic cigarette vapor can be produced by the electronic cigarette vaporizer. The electronic cigarette may be further arranged with an LED indicator for indicating a certain working state, or arranged with a vibrating motor for indicating a certain working state by vibration. The electronic cigarette according to the disclosure has a child lock function. It automatically performs unlocking or locking prior to activation or after usage of the electronic cigarette, so as to prevents children from using the electronic cigarette to vape by themselves. The electronic cigarette of the disclosure may be specifically provided with a child lock controlling unit in the control circuit or the microcontroller. It runs the child lock controlling program by means of the child lock controlling unit, so as to control unlocking and locking of the electronic cigarette.

According to a control method of an electronic cigarette with a child lock function of the disclosure, the microcontroller of the electronic cigarette is set with a child lock control program, and the child lock control program comprises unlocking steps as follows.
S1. In the locked state in which the electronic cigarette is inactive, the microcontroller monitors a signal indicating the touch button is touched in real time;
S2. Once it is detected that the touch button is touched, the microcontroller determines whether the duration of time during which the touch button is touched exceeds a first set time, if yes, go to the next step; if no, go back to the step S1;
S3. The microcontroller controls the LED indicator to light up, and the duration of time during which the LED indicator is lighted is a second set time, and meanwhile, continuously monitors whether the touch button is consecutively touched;
S4. Once it is detected that the touch button is consecutively touched, the microcontroller determines whether the number of times the touch button is consecutively touched in the second set time reaches the set number, if yes, go to the next step; if no, go back to the step S1;
S5. The microcontroller unlocks the electronic cigarette, and lights up the LED indicator for indication or vibrates the vibrating motor for indication, and the electronic cigarette which is unlocked enters a stand-by state.

According to a further control method of an electronic cigarette with a child lock function of the disclosure, the microcontroller of the electronic cigarette is set with a child lock control program, and the child lock control program comprises unlocking and locking steps as follows.
S1. In the locked state in which the electronic cigarette is inactive, the microcontroller monitors a signal indicating the touch button is touched in real time;
S2. Once it is detected that the touch button is touched, the microcontroller determines whether the duration of time during which the touch button is touched exceeds a first set time, if yes, go to the next step; if no, go back to the step S1;
S3. The microcontroller controls the LED indicator to light up, and the duration of time during which the LED indicator is lighted is a second set time, and meanwhile, continuously monitors whether the touch button is consecutively touched;
S4. Once it is detected that the touch button is consecutively touched, the microcontroller determines whether the number of times the touch button is consecutively touched in the second set time reaches the set number, if yes, go to the next step; if no, go back to the step S1;
S5. The microcontroller unlocks the electronic cigarette, and lights up the LED indicator for indication or vibrates the vibrating motor for indication, and the electronic cigarette which is unlocked enters a stand-by state;
S6. Once the electronic cigarette enters the stand-by state, the microcontroller monitors whether the airflow sensor is triggered in real time in a third set time, if no, go to the next step; if yes, go to a step S8;
S7. The microcontroller locks the electronic cigarette, and the electronic cigarette which is locked enters the locked state, in which the electronic cigarette is inactive, that is, go back to the step S1;
S8. The microcontroller controls the electronic cigarette to enter a working state and monitors the airflow sensor, and if it is detected that the triggering of the airflow sensor stops, the microcontroller controls the electronic cigarette to enter the stand-by state, and go back to the step S6.

According to a further control method of an electronic cigarette with a child lock function of the disclosure, the microcontroller of the electronic cigarette is set with a child lock control program, and the child lock control program comprises unlocking and locking steps as follows.
S1. In the locked state in which the electronic cigarette is inactive, the microcontroller monitors a signal indicating the touch button is touched in real time;
S2. Once it is detected that the touch button is touched, the microcontroller determines whether the duration of time during which the touch button is touched exceeds a first set time, if yes, go to the next step; if no, go back to the step S1;
S3. The microcontroller controls the LED indicator to light up, and the duration of time during which the LED indicator is lighted is a second set time, and meanwhile, continuously monitors whether the touch button is consecutively touched;
S4. Once it is detected that the touch button is consecutively touched, the microcontroller determines whether the number of times the touch button is consecutively touched in the second set time reaches the set number, if yes, go to the next step; if no, go back to the step S1;
S5. The microcontroller unlocks the electronic cigarette, and lights up the LED indicator for indication or vibrates the vibrating motor for indication, and the electronic cigarette which is unlocked enters a stand-by state;
S6. Once the electronic cigarette enters the stand-by state, the microcontroller monitors the signal indicating the touch button is touched in real time;
S7. Once it is detected that the touch button is touched, the microcontroller determines whether the duration of time during which the touch button is touched exceeds the first set time, if yes, go to the next step; if no, go back to the step S6;
S8. The microcontroller controls the LED indicator to light up, and the duration of time during which the LED indicator is lighted is a second set time, and meanwhile, continuously monitors whether the touch button is consecutively touched;
S9. Once it is detected that the touch button is consecutively touched, the microcontroller determines whether the number of times the touch button is consecutively touched in the second set time reaches the set number, if yes, go to the next step; if no, go back to the step S6;
S10. The microcontroller locks the electronic cigarette, and lights up the LED indicator for indication or vibrates the vibrating motor for indication, and the electronic cigarette which is locked enters the locked state, that is, go back to the step S1.

In the above methods, the first set time may be set to 3-6 seconds, the second set time may be set to 2-5 seconds, the number of times may be set to 3-5, and the third set time may be set to 2-30 minutes.

### Embodiments of the disclosure

The invention is described in detail with reference to particular embodiments.

### Embodiment 1

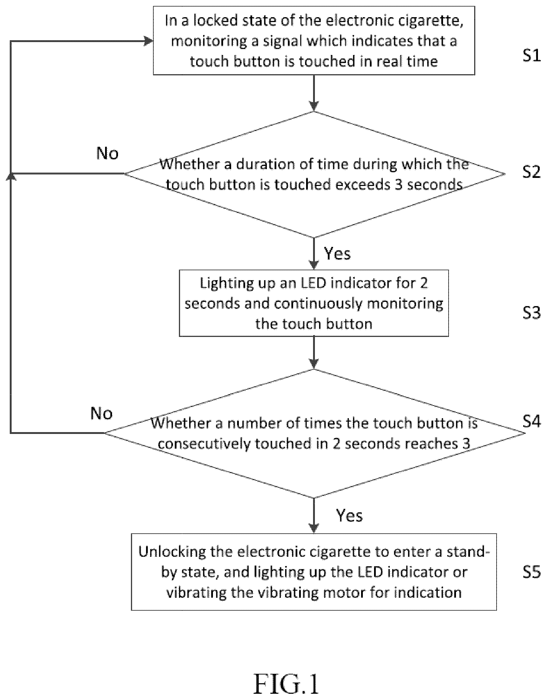

Referring to FIG.1, in a particular control method of an electronic cigarette with a child lock function according to Embodiment 1 of the disclosure, the microcontroller provided in the electronic cigarette is set with a child lock control program, and the child lock control program comprises unlocking steps as follows.
S1. in the locked state in which the electronic cigarette is inactive, monitoring a signal indicating the touch button is touched in real time by means of the microcontroller;
S2. once it is detected that the touch button is touched, determining whether the duration of time during which the touch button is touched exceeds 3 seconds by means of the microcontroller, if yes, go to the next step; if no, go back to the step S1;
S3. by means of the microcontroller, controlling the LED indicator to light up, wherein the LED indicator is lighted for 2 seconds, and meanwhile, continuously monitoring whether the touch button is consecutively touched;
S4. once it is detected that the touch button is consecutively touched, determining whether the number of times the touch button is consecutively touched in 2 seconds reaches 3 by means of the microcontroller, if yes, go to the next step; if no, go back to the step S1;
S5. by means of the microcontroller, unlocking the electronic cigarette, and lighting up the LED indicator for indication or vibrating the vibrating motor for indication, to allow the electronic cigarette which is unlocked to enter a stand-by state.

The stand-by state as used herein refers to a state in which the electronic cigarette is ready to work. In another word, once the user vapes in such state, the airflow sensor of the electronic cigarette will be triggered, so as to activate the electronic cigarette to work.

### Embodiment 2

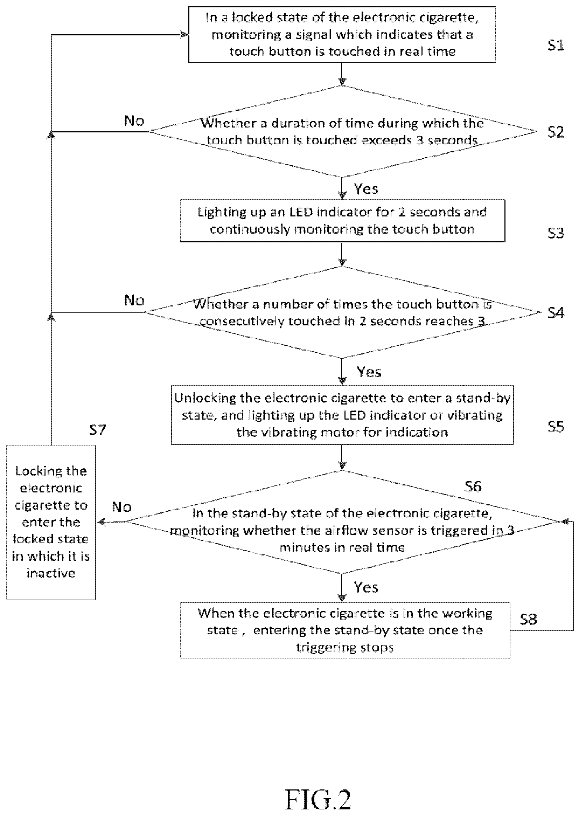

Referring to FIG.2, in a particular control method of an electronic cigarette with a child lock function according to Embodiment 2 of the disclosure, the microcontroller provided in the electronic cigarette is set with a child lock control program, and the child lock control program comprises unlocking and locking steps as follows.
S1. in the locked state in which the electronic cigarette is inactive, monitoring a signal indicating the touch button is touched in real time by means of the microcontroller;
S2. once it is detected that the touch button is touched, determining whether the duration of time during which the touch button is touched exceeds 3 seconds by means of the microcontroller, if yes, go to the next step; if no, go back to the step S1;
S3. by means of the microcontroller, controlling the LED indicator to light up, wherein the LED indicator is lighted for 2 seconds, and meanwhile continuously monitoring whether the touch button is consecutively touched;
S4. once it is detected that the touch button is consecutively touched, determining whether the number of times the touch button is consecutively touched in 2 seconds reaches 3 by means of the microcontroller, if yes, go to the next step; if no, go back to the step S1;
S5. by means of the microcontroller, unlocking the electronic cigarette, and lighting up the LED indicator for indication or vibrating the vibrating motor for indication, to allow the electronic cigarette which is unlocked to enter a stand-by state;
S6. once the electronic cigarette enters the stand-by state, by means of the microcontroller, monitoring whether the airflow sensor is triggered in real time in 5 minutes, if no, go to the next step; if yes, go to a step S8;
S7. by means of the microcontroller, locking the electronic cigarette such that the electronic cigarette which is locked enters the locked state and stop functioning, that is, going back to the step S1;
S8. by means of the microcontroller, controlling the electronic cigarette to enter a working state and monitoring the airflow sensor; once it is detected that the triggering of the airflow sensor stops, controlling the electronic cigarette to enter the stand-by state and going back to the step S6.

In the embodiment, the locking steps achieve an automatic locking process which runs depending on time.

### Embodiment 3

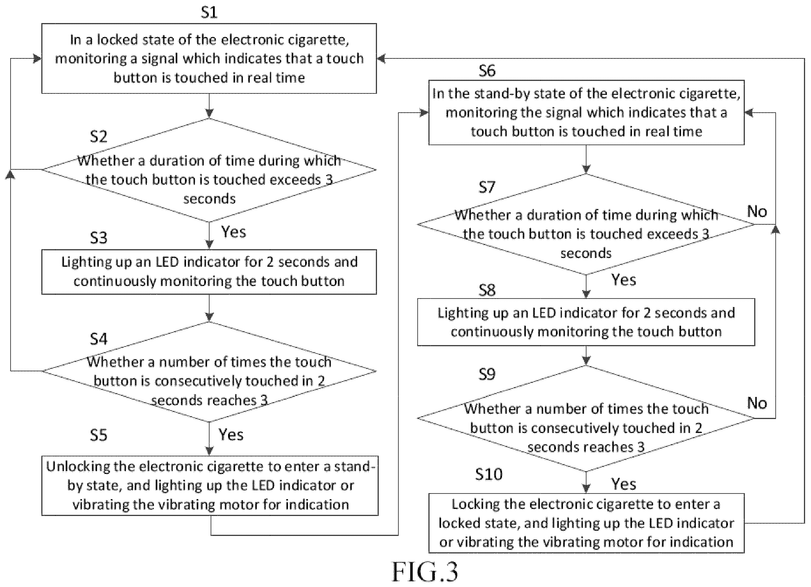

Referring to FIG.3, in a particular control method of an electronic cigarette with a child lock function according to Embodiment 3 of the disclosure, the microcontroller provided in the electronic cigarette is set with a child lock control program, and the child lock control program comprises unlocking and locking steps as follows.
S1. in the locked state in which the electronic cigarette is inactive, monitoring a signal indicating the touch button is touched in real time by means of the microcontroller;
S2. once it is detected that the touch button is touched, determining whether the duration of time during which the touch button is touched exceeds 3 seconds by means of the microcontroller, if yes, go to the next step; if no, go back to the step S1;
S3. by means of the microcontroller, controlling the LED indicator to light up, wherein the LED indicator is lighted for 2 seconds, and meanwhile continuously monitoring whether the touch button is consecutively touched;
S4. once it is detected that the touch button is consecutively touched, determining whether the number of times the touch button is consecutively touched in 2 seconds reaches 3 by means of the microcontroller, if yes, go to the next step; if no, go back to the step S1;
S5. by means of the microcontroller, unlocking the electronic cigarette, and lighting up the LED indicator for indication or vibrating the vibrating motor for indication, to allow the electronic cigarette which is unlocked to enter a stand-by state;
S6. once the electronic cigarette enters the stand-by state, monitoring the signal indicating the touch button is touched in real time by means of the microcontroller;
S7. once it is detected that the touch button is touched, determining whether the duration of time during which the touch button is touched exceeds 3 seconds by means of the microcontroller, if yes, go to the next step; if no, go back to the step S6;
S8. by means of the microcontroller, controlling the LED indicator to light up, wherein the LED indicator is lighted for 2 seconds, and meanwhile, continuously monitoring whether the touch button is consecutively touched;
S9. once it is detected that the touch button is consecutively touched, determining whether the number of times the touch button is consecutively touched in 2 seconds reaches 3 by means of the microcontroller, if yes, go to the next step; if no, go back to the step S6;
S10. by means of the microcontroller, locking the electronic cigarette and lighting up the LED indicator for indication or vibrating the vibrating motor for indication, to allow the electronic cigarette which is locked to enter the locked state, that is, go back to the step S1.

In the embodiment, the locking steps achieve a manual locking process which runs as needed.

In further embodiments, the respective set time and the number of times may be set in other appropriate ways.

The particular control methods of an electronic cigarette with a child lock function according to the disclosure comprises a control program for unlocking and locking. By monitoring touch duration and number of touches for the visibly hidden touch button, it sets complicated steps required for unlocking of the electronic cigarette. In such a case, it is difficult for children to find out the visibly hidden touch button, and it is further difficult for children to get access to such complicated unlocking steps without being taught by an adult. Furthermore, it sets some steps for automatically locking the electronic cigarette within a certain period of time after usage of the electronic cigarette, or sets some steps for manually triggering the touch button to achieve locking in the stand-by state. Hence, it effectively prevents children from using the electronic cigarette to vape by themselves, and avoid the damage caused thereby.

### Industrial applicability

All the above are merely preferred embodiments of the disclosure. The present invention is defined by the appended claims.

## Claims

1. A control method of an electronic cigarette with a child lock function, wherein a microcontroller provided in the electronic cigarette is set with a child lock control program which comprises unlocking steps of:
step (S1): in a locked state in which the electronic cigarette is inactive, monitoring a signal which indicates that a touch button is touched in real time by means of the microcontroller;
step (S2): once it is detected that the touch button is touched, determining whether a duration of time during which the touch button is touched exceeds a first set time by means of the microcontroller, if yes, go to the next step;
step (S3): by means of the microcontroller, continuously monitoring during a second set time whether the touch button is consecutively touched;
step (S4): once it is detected that the touch button is consecutively touched, determining whether a number of times the touch button is consecutively touched in the second set time reaches a set number by means of the microcontroller, if yes, go to the next step;
step (S5): by means of the microcontroller, unlocking the electronic cigarette, and lighting up the LED indicator for indication or vibrating the vibrating motor for indication, to allow the electronic cigarette which is unlocked to enter a stand-by state,
**characterized in that**
the LED indicator is light up for the second set time.

2. The control method of an electronic cigarette with a child lock function according to claim 1, wherein the step (S2) further comprises: if no, go back to the step (S1) the step (S4) further comprises: if no, go back to the step (S1)

3. The control method of an electronic cigarette with a child lock function according to claim 1, wherein the child lock control program further comprises locking steps of:
step (S6): once the electronic cigarette enters the stand-by state, monitoring whether an airflow sensor is triggered in real time in a third set time by means of the microcontroller, if no, go to the next step;
step (S7): locking the electronic cigarette by means of the microcontroller, to allow the electronic cigarette which is locked to enter the locked state, in which the electronic cigarette is inactive, that is, go back to the step (S1)

4. The control method of an electronic cigarette with a child lock function according to claim 3, wherein the step (S2) further comprises: if no, go back to the step (S1) the step (S4) further comprises: if no, go back to the step (S1) the step (S6) further comprises: if yes, go to a step (S8), wherein the control method further comprises the step (S8) of controlling the electronic cigarette to enter a working state and monitoring the airflow sensor by means of the microcontroller, and once it is detected that a triggering of the airflow sensor stops, controlling the electronic cigarette to enter the stand-by state and go back to the step (S6)

5. The control method of an electronic cigarette with a child lock function according to claim 1, wherein the child lock control program further comprises locking steps of:
step (S6): once the electronic cigarette enters the stand-by state, monitoring the signal indicating the touch button is touched in real time by means of the microcontroller;
step (S7): once it is detected that the touch button is touched, determining whether a duration of time during which the touch button is touched exceeds the first set time by means of the microcontroller, if yes, go to the next step;
step (S8): by means of the microcontroller, controlling the LED indicator to light up for the second set time and meanwhile continuously monitoring whether the touch button is consecutively touched;
step (S9): once it is detected that the touch button is consecutively touched, determining whether a number of times the touch button is consecutively touched in the second set time reaches the set number by means of the microcontroller, if yes, go to the next step;
step (S10): by means of the microcontroller, locking the electronic cigarette and lighting up the LED indicator for indication or vibrating the vibrating motor for indication, to allow the electronic cigarette which is locked to enter the locked state, that is, go back to the step (S1)

6. The control method of an electronic cigarette with a child lock function according to claim 5, wherein the step (S2) further comprises: if no, go back to the step (S1) the step (S4) further comprises: if no, go back to the step (S1) the step (S7) further comprises: if no, go back to the step (S6) and the step (S9) further comprises: if no, go back to the step (S6)

7. The control method of an electronic cigarette with a child lock function according to any one of claims 1-6, wherein the first set time is set to 3-6 seconds.

8. The control method of an electronic cigarette with a child lock function according to any one of claims 1-6, wherein the second set time is set to 2-5 seconds.

9. The control method of an electronic cigarette with a child lock function according to any one of claims 1-6, wherein the number of times is set to 3-5.

10. The control method of an electronic cigarette with a child lock function according to claim 3 or 4, wherein the third set time is set to 2-30 minutes.

## Patentansprüche

1. Ein Steuerungsverfahren für eine elektronische Zigarette mit einer Kindersicherungsfunktion, wobei ein in der elektronischen Zigarette vorgesehener Mikrocontroller mit einem Kindersicherungs-Steuerprogramm konfiguriert ist, das die folgenden Entsperrschritte umfasst:
| | |
|---|---|
| Schritt (S1): | in einem gesperrten Zustand, in dem die elektronische Zigarette inaktiv ist, Überwachen eines Signals, das anzeigt, dass eine Berührungstaste berührt wird, in Echtzeit mittels des Mikrocontrollers; |
| Schritt (S2): | sobald erfasst wird, dass die Berührungstaste berührt wird, Bestimmen mittels des Mikrocontrollers, ob eine Zeitdauer, während der die Berührungstaste berührt wird, eine erste festgelegte Zeit überschreitet, und wenn ja, Übergehen zum nächsten Schritt; |
| Schritt (S3): | mittels des Mikrocontrollers, kontinuierliches Überwachen während einer zweiten festgelegten Zeit, ob die Berührungstaste aufeinanderfolgend berührt wird; |
| Schritt (S4): | sobald erfasst wird, dass die Berührungstaste aufeinanderfolgend berührt wird, Bestimmen mittels des Mikrocontrollers, ob die Häufigkeit, mit der die Berührungstaste in der zweiten festgelegten Zeit aufeinanderfolgend berührt wird, eine festgelegte Anzahl erreicht, und wenn ja, Übergehen zum nächsten Schritt; |
| Schritt (S5): | mittels des Mikrocontrollers, Entsperren der elektronischen Zigarette und Aufleuchtenlassen der LED-Anzeige zur Anzeige oder Vibrierenlassen des Vibrationsmotors zur Anzeige, um der |
| | entsperrten elektronischen Zigarette zu ermöglichen, in einen Bereitschaftszustand überzugehen, |
**dadurch gekennzeichnet, dass**
die LED-Anzeige für die zweite festgelegte Zeit aufleuchtet.

2. Das Steuerungsverfahren nach Anspruch 1, wobei der Schritt (S2) ferner umfasst:
wenn nein, Zurückgehen zum Schritt (S1);
der Schritt (S4) ferner umfasst:
wenn nein, Zurückgehen zum Schritt (S1).

3. Das Steuerungsverfahren nach Anspruch 1, wobei das Kindersicherungs-Steuerprogramm ferner die folgenden Sperrschritte umfasst:
| | |
|---|---|
| Schritt (S6): | sobald die elektronische Zigarette in den Bereitschaftszustand eintritt, Überwachen mittels des Mikrocontrollers, ob ein Luftstromsensor in Echtzeit innerhalb einer dritten festgelegten Zeit ausgelöst wird, und wenn nein, Übergehen zum nächsten Schritt; |
| Schritt (S7): | Sperren der elektronischen Zigarette mittels des Mikrocontrollers, um der gesperrten elektronischen Zigarette zu ermöglichen, in den gesperrten Zustand überzugehen, in dem die elektronische Zigarette inaktiv ist, d. h. Zurückgehen zum Schritt (S1). |

4. Das Steuerungsverfahren nach Anspruch 3, wobei der Schritt (S2) ferner umfasst:
wenn nein, Zurückgehen zum Schritt (S1);
der Schritt (S4) ferner umfasst:
wenn nein, Zurückgehen zum Schritt (S1);
der Schritt (S6) ferner umfasst:
wenn ja, Übergehen zu einem Schritt (S8),
wobei das Steuerungsverfahren ferner den Schritt (S8) des Steuerns der elektronischen Zigarette zum Eintreten in einen Arbeitszustand und des Überwachens des Luftstromsensors mittels des Mikrocontrollers umfasst, und sobald erfasst wird, dass eine Auslösung des Luftstromsensors stoppt, des Steuerns der elektronischen Zigarette zum Eintreten in den Bereitschaftszustand und des Zurückgehens zum Schritt (S6).

5. Das Steuerungsverfahren nach Anspruch 1, wobei das Kindersicherungs-Steuerprogramm ferner die folgenden Sperrschritte umfasst:
| | |
|---|---|
| Schritt (S6): | sobald die elektronische Zigarette in den Bereitschaftszustand eintritt, Überwachen des Signals, das die Berührung der Berührungstaste anzeigt, in Echtzeit mittels des Mikrocontrollers; |
| Schritt (S7): | sobald erfasst wird, dass die Berührungstaste berührt wird, Bestimmen mittels des Mikrocontrollers, ob eine Zeitdauer, während der die Berührungstaste berührt wird, die erste festgelegte Zeit überschreitet, und wenn ja, Übergehen zum nächsten Schritt; |
| Schritt (S8): | mittels des Mikrocontrollers, Steuern des Aufleuchtens der LED-Anzeige für die zweite festgelegte Zeit und gleichzeitiges kontinuierliches Überwachen, ob die Berührungstaste aufeinanderfolgend berührt wird; |
| Schritt (S9): | sobald erfasst wird, dass die Berührungstaste aufeinanderfolgend berührt wird, Bestimmen mittels des Mikrocontrollers, ob die Häufigkeit, mit der die Berührungstaste in der zweiten festgelegten Zeit aufeinanderfolgend berührt wird, die festgelegte Anzahl erreicht, und wenn ja, Übergehen zum nächsten Schritt; |
| Schritt (S10): | : mittels des Mikrocontrollers, Sperren der elektronischen Zigarette und Aufleuchtenlassen der LED-Anzeige zur Anzeige oder Vibrierenlassen des Vibrationsmotors zur Anzeige, um der gesperrten elektronischen Zigarette zu ermöglichen, in den gesperrten Zustand überzugehen, d. h. Zurückgehen zum Schritt (S1). |

6. Das Steuerungsverfahren nach Anspruch 5,
wobei der Schritt (S2) ferner umfasst:
wenn nein, Zurückgehen zum Schritt (S1);
der Schritt (S4) ferner umfasst:
wenn nein, Zurückgehen zum Schritt (S1);
der Schritt (S7) ferner umfasst:
wenn nein, Zurückgehen zum Schritt (S6);
und der Schritt (S9) ferner umfasst:
wenn nein, Zurückgehen zum Schritt (S6).

7. Das Steuerungsverfahren nach einem der Ansprüche 1 bis 6, wobei die erste festgelegte Zeit auf 3 bis 6 Sekunden eingestellt ist.

8. Das Steuerungsverfahren nach einem der Ansprüche 1 bis 6, wobei die zweite festgelegte Zeit auf 2 bis 5 Sekunden eingestellt ist.

9. Das Steuerungsverfahren nach einem der Ansprüche 1 bis 6, wobei die Anzahl der Male auf 3 bis 5 eingestellt ist.

10. Das Steuerungsverfahren nach Anspruch 3 oder 4, wobei die dritte festgelegte Zeit auf 2 bis 30 Minuten eingestellt ist.

## Revendications

1. Un procédé de commande pour cigarette électronique ayant une fonction de verrou enfant, dans lequel un microcontrôleur prévu dans la cigarette électronique est configuré avec un programme de commande de verrou enfant qui comprend les étapes de déverrouillage suivantes:
| | |
|---|---|
| étape (S1): | dans un état verrouillé où la cigarette électronique est inactive, la surveillance en temps réel, au moyen du microcontrôleur, d'un signal qui indique qu'un bouton tactile est touché; |
| étape (S2): | une fois qu'il est détecté que le bouton tactile est touché, la détermination, au moyen du microcontrôleur, si une durée pendant laquelle le bouton tactile est touché dépasse une première durée prédéfinie, et si oui, le passage à l'étape suivante; |
| étape (S3): | au moyen du microcontrôleur, la surveillance en continu pendant une deuxième durée prédéfinie pour savoir si le bouton tactile est touché de manière consécutive; |
| étape (S4): | une fois qu'il est détecté que le bouton tactile est touché de manière consécutive, la détermination, au moyen du microcontrôleur, si le nombre de fois où le bouton tactile est touché de manière consécutive pendant la deuxième durée prédéfinie atteint un nombre prédéfini, et si oui, le passage à l'étape suivante; |
| étape (S5): | au moyen du microcontrôleur, le déverrouillage de la cigarette électronique, et l'allumage du voyant LED pour indication ou la vibration du moteur vibrant pour indication, afin de permettre à la cigarette électronique déverrouillée d'entrer dans un état de veille, |
**caractérisé en ce que**
le voyant LED est allumé pendant la deuxième durée prédéfinie.

2. Le procédé de commande d'une cigarette électronique ayant une fonction de verrou enfant selon la revendication 1, dans lequel l'étape (S2) comprend en outre:
si la réponse est non, le retour à l'étape (S1);
et l'étape (S4) comprend en outre :
si la réponse est non, le retour à l'étape (S1).

3. Le procédé de commande d'une cigarette électronique ayant une fonction de verrou enfant selon la revendication 1, dans lequel le programme de commande de verrou enfant comprend en outre les étapes de verrouillage suivantes:
| | |
|---|---|
| étape (S6): | une fois que la cigarette électronique entre dans l'état de veille, la surveillance, au moyen du microcontrôleur, pour savoir si un capteur de débit d'air est déclenché en temps réel pendant une troisième durée prédéfinie, et si la réponse est non, le passage à l'étape suivante; |
| étape (S7): | le verrouillage de la cigarette électronique au moyen du microcontrôleur, pour permettre à la cigarette électronique verrouillée d'entrer dans l'état verrouillé, dans lequel la cigarette électronique est inactive, c'est-à-dire le retour à l'étape (S1). |

4. Le procédé de commande d'une cigarette électronique ayant une fonction de verrou enfant selon la revendication 3, dans lequel l'étape (S2) comprend en outre:
si la réponse est non, le retour à l'étape (S1);
l'étape (S4) comprend en outre:
si la réponse est non, le retour à l'étape (S1);
l'étape (S6) comprend en outre:
si la réponse est oui, le passage à une étape (S8),
dans lequel le procédé de commande comprenant en outre l'étape (S8) consistant à commander la cigarette électronique pour la faire entrer dans un état de fonctionnement et à surveiller le capteur de débit d'air au moyen du microcontrôleur, et une fois qu'un arrêt du déclenchement du capteur de débit d'air est détecté, à commander la cigarette électronique pour la faire entrer dans l'état de veille et à revenir à l'étape (S6).

5. Le procédé de commande d'une cigarette électronique ayant une fonction de verrou enfant selon la revendication 1, dans lequel le programme de commande de verrou enfant comprend en outre les étapes de verrouillage suivantes:
| | |
|---|---|
| étape (S6): | une fois que la cigarette électronique entre dans l'état de veille, la surveillance en temps réel, au moyen du microcontrôleur, du signal indiquant que le bouton tactile est touché; |
| étape (S7): | une fois qu'il est détecté que le bouton tactile est touché, la détermination, au moyen du microcontrôleur, si une durée pendant laquelle le bouton tactile est touché dépasse la première durée prédéfinie, et si oui, le passage à l'étape suivante; |
| étape (S8): | au moyen du microcontrôleur, la commande de l'allumage du voyant LED pendant la deuxième durée prédéfinie et, simultanément, la surveillance en continu pour savoir si le bouton tactile est touché de manière consécutive; |
| étape (S9): | une fois qu'il est détecté que le bouton tactile est touché de manière consécutive, la détermination, au moyen du microcontrôleur, si le nombre de fois où le bouton tactile est touché de manière consécutive pendant la deuxième durée prédéfinie atteint le nombre prédéfini, et si oui, le passage à l'étape suivante; |
| étape (S10): | au moyen du microcontrôleur, le verrouillage de la cigarette électronique et l'allumage du voyant LED pour indication ou la vibration du moteur vibrant pour indication, afin de permettre à la |
| | cigarette électronique verrouillée d'entrer dans l'état verrouillé, c'est-à-dire, le retour à l'étape (S1). |

6. Le procédé de commande d'une cigarette électronique ayant une fonction de verrou enfant selon la revendication 5, dans lequel l'étape (S2) comprend en outre:
si la réponse est non, le retour à l'étape (S1);
l'étape (S4) comprend en outre:
si la réponse est non, le retour à l'étape (S1);
l'étape (S7) comprend en outre:
si la réponse est non, le retour à l'étape (S6);
et l'étape (S9) comprend en outre:
si la réponse est non, le retour à l'étape (S6).

7. Le procédé de commande d'une cigarette électronique ayant une fonction de verrou enfant selon l'une quelconque des revendications 1 à 6, dans lequel la première durée prédéfinie est réglée de 3 à 6 secondes.

8. Le procédé de commande d'une cigarette électronique ayant une fonction de verrou enfant selon l'une quelconque des revendications 1 à 6, dans lequel la deuxième durée prédéfinie est réglée de 2 à 5 secondes.

9. Le procédé de commande d'une cigarette électronique ayant une fonction de verrou enfant selon l'une quelconque des revendications 1 à 6, dans lequel le nombre de fois est réglé de 3 à 5.

10. Le procédé de commande d'une cigarette électronique ayant une fonction de verrou enfant selon la revendication 3 ou 4, dans lequel la troisième durée prédéfinie est réglée de 2 à 30 minutes.
